# EUROPEAN PATENT APPLICATION

(11) **EP 1 145 671 A2**
(43) Date of publication of application: **17.10.2001**
(21) Application number: 01109128.7
(22) Date of filing: 12.04.2001
(51) Int. Cl.: A47D 9/02, A47D 9/04, A47D 13/10, B62B 9/22

(54) **Device for the rhythmic rocking of a container for newborn or child**

(30) Priority: 13.04.2000 IT BO000215
(71) Applicant: MA-BIMBO S.r.l., 40012 Calderara Di Reno (Bologna) (IT)
(72) Inventor: Franceschini, Cristina, 40012 Calderara Di Reno (Bologna) (IT)
(74) Representative: Negrini, Elena

(57) **Abstract**

A device for the rhythmic rocking of container (19) for newborn or child includes:
- a housing (5) having power supply elements (4) of a motor mean (3) associated thereto;
- fixing means, first (11) and second (12), respectively connectable to said container (19) for newborn or child and to fixed stops (18);
- motion transmission means (50) from said motor means (3) to at least one of said fixing means, first (11) and second (12), provided with at least an external free end to said housing (5).

In correspondence of a rocking condition, the motion transmission means (50) move, with a forward and back motion following the activation of said motor means (3), at least said fixing means, first (11) and second (12), connected at the free end of said motion transmission means (50).

## Description

The present invention relates to the accessories for newborn children, particularly it refers to a device which can be applied to accessories typically used for supporting newborn children, such as little bed, cradle, seats, baby carriage, strollers, etc.

It is known that rocking is the most used system to calm down the newborn children, to make them sleeping, or to put them to sleep again.

Such movement generally is made by the manual rocking of beds, cradles, baby carriages, seats and similar, said rocking in some cases extends for a lot of time because of the difficulty that some child has in falling asleep.

Firstly this involves the constant presence of a person suitable for such operation and secondary a fair energy waste for the operator.

There are known automatic devices fit to be fixed, in some cases detachably, to the baby carriages or to the beds in order to transmit to said devices an oscillatory movement. However said devices have excessive dimensions and installation difficulties.

A further drawback of said known devices is that each of them is "untied", as it were, from the mother, since it is fit to the child container, and therefore often the mother, also for irrational reasons, does not like that an electro-mechanical device "rock" her own child.

The main object of the present invention is to provide a mobile and portable device suitable to replace the manual employment of a person for rocking the cradle, bed, baby carriage or similar in order to help the newborn's sleep, even maintaining the connection between adult and child.

A further object of the present invention is to propose a device fit for simulating natural movements and vibrations that the child particularly knows, such as the undulatory movements inside the maternal womb.

A further object of the present invention is to propose an adaptable-type device, which can be moved and easily fit in any kind of accessory suitable for the children containment such as cradles, bed, strollers, baby carriages, seats and similar.

Another object is to propose a device having small dimensions and weight, which can be easily moved and fit to any type of container by any operator. A last object of the present invention is to propose a device having an easy realization, and an easy installation and maintenance.

The above mentioned objects are achieved according to the claims content. The characteristics of the present invention are underlined in the following with reference to the attached drawings, in which:
- figure 1 shows a front section view of a preferred embodiment of the device object of the present invention;
- figure 2 shows a front section view of a first variant of the device of figure 1;
- figure 3 shows a front view of a second embodiment of the device object of the present invention.
- figure 4 shows a front view of a third embodiment of the device object of the invention;
- figures 5A and 5B show perspective views of a fourth embodiment of the device object of the present invention respectively in an operational and in a no-operational position;
- figures 6 and 7 show perspective view of a second variant of the device of figure 1 in two extreme condition respectively of minimum and maximum extension;
- figure 8 shows a perspective view of figure 6 in witch some parts are omitted to show better other parts.

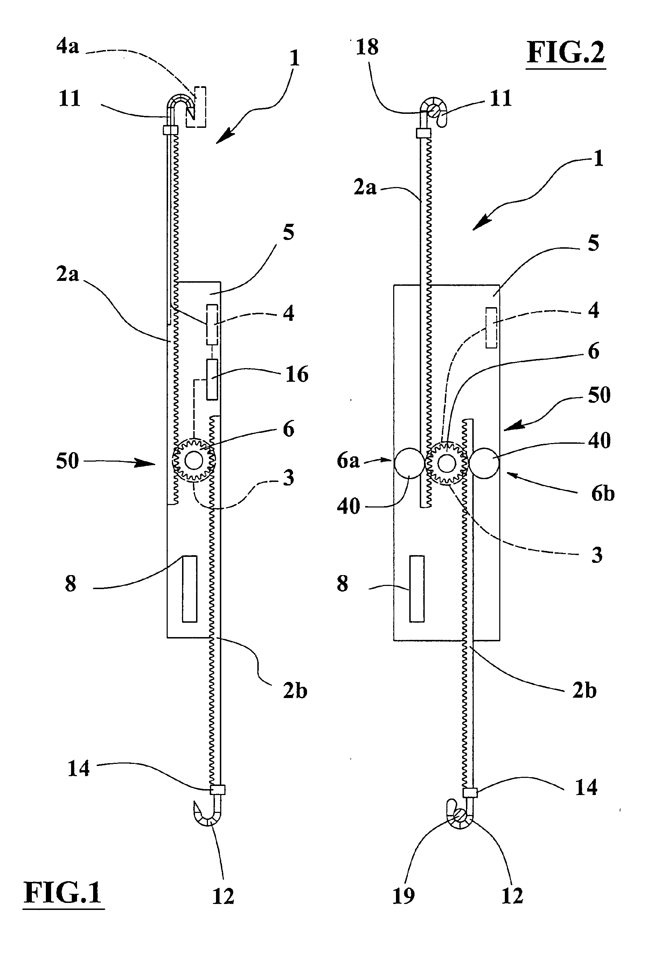

With reference to figure 1, numeral 1 indicates the device for rhythmic rocking a newborn or child container, such as cradle, baby carriage, bed and similar, essentially including a housing 5, fixing means, first 11 and second 12, motion transmission means 50, motor mean 3 and control means 16.

The housing 5 supports power supply elements 4 of the electric type with high capacity battery connected to a motor 3 also fixed inside the housing 5. A pinion gear 6 is installed on the shaft of the motor 3, said pinion engages the motion transmission means 50, constituted by a couple of rack rods 2a, 2b positioned on opposed sides of the pinion 6 and having at the ends the fixing means, first 11 and second 12, located completely outside the housing 5.

Such rods 2a, 2b are slidably supported by the housing 5 that drives the rods in their alternate motion imposed by the forward-back rotation imposed by the motor 3.

The control means 16, connected with the motor 3, is essentially constituted by an electronic unit for the control and the storage of preset data, for instance related to the oscillation frequency and duration and to the amplitude value of the motion transmission means 50.

The operational modes of the device 1 provides at first the locking of the fixing means, first 11 and second 12, to the container, known and not shown of baby carriage, cradle, bed type, and to a fixed stop 18 which can even be the person delegated to guard the newborn and /or child.

Then, in correspondence of a rocking condition, the motor 3 is activated, that, by means of an alternate forward-back motion, rotates the pinion gear 6 causing a parallel and opposite translation to the two fixing means, first 11 and second 12.

A first variant of the device shown in figure 2, provides to assemble, externally to every rack rod 2a, 2b, at the opposed sides of the pinion gear 6, two guiding means 6a, 6b so that to drive the rods and to guarantee the correct mesh with the pinion gear 6.

The device 1 allows a preliminary regulation of its axial dimensions since it is possible to start the motor oscillation from different preset starting conditions, therefore with different protrusions of the motion transmission means 50 from the housing 5.

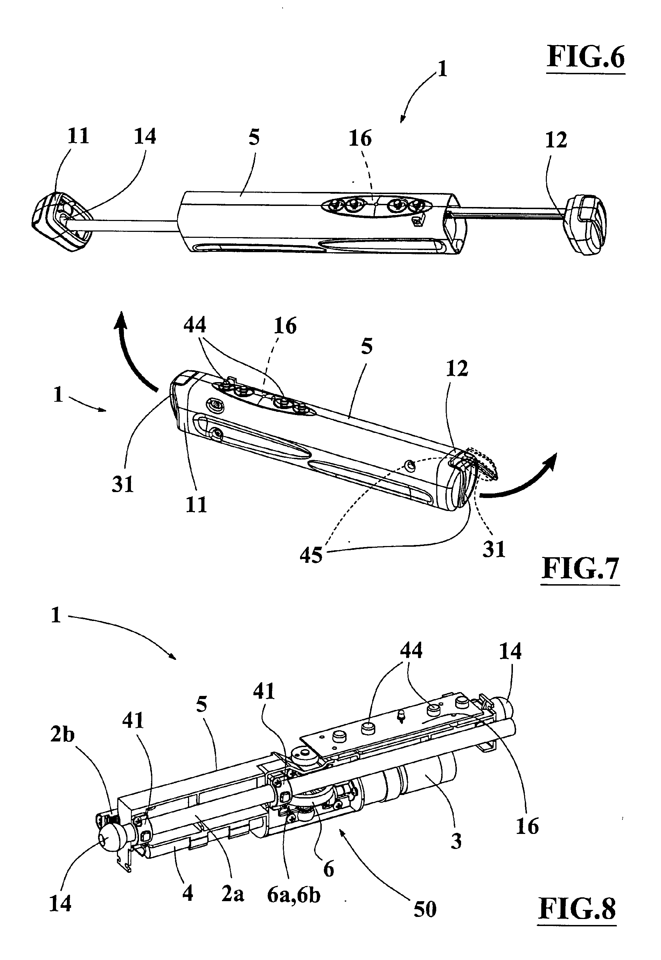

The second variant of the device, shown in figures 6 - 8, provides that the pinion gear 6 has two annular toothed portions and that the motor 3 lays parallel to the rack rods 2a, 2b in order to minimize the dimension of the device.

The guiding means 6a, 6b consist in an annular guide 41 made of a plastic material as teflon or nylon to minimize friction and weight of the device 1.

Each fixing means 11, 12 comprises an adjustable belt 31, for instance of a removable adhesive band as the so called Velcro or Dual Lock band, that can be easily fixed to many cradles, baby carriages, beds and to fixed stops, such as the body of the person taking care of the baby.

Each adjustable belt 31 can be fixed to a swiveling element 45 carried out at the ends of each fixing means 11, 12.

In a rest condition, the swiveling elements 45 can be closed covering the adjustable belts 31; consequently each adjustable belt 31 is positioned between the related fixing means 11, 12 and swiveling elements 45. In an operating condition, the swiveling elements 45 can be rotated by the user for positioning the adjustable belts 31 outward.

The control mean 16 controls the motor mean 3 in order to carry out at least two rhythmic rocking motions. A first rocking motion in the range of 13 - 17 oscillations per minute has a stroke of the rods 2a, 2b ranging from 12 cm to 18 cm. A second rocking motion in the range of 8 - 12 oscillations per minute has a stroke of the rods 2a, 2b ranging from 25 cm to 40 cm.

The first and second movements can by imposed by the user on a user interface 44, for instance consisting in a plurality of push buttons, of the control mean 16.

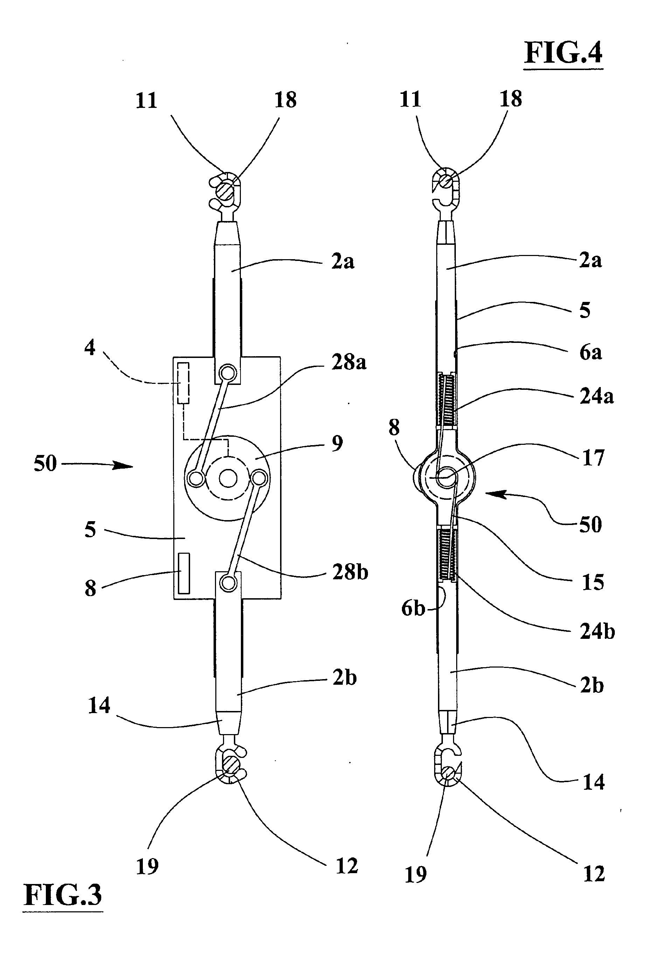

The figure 3 shows a second embodiment of the device object of the invention, in which between each motion transmission mean 50 and the motor 3 is positioned a kinematic motion including two connecting rods 28a, 28b and a crank 9 suitable to impose a synchronous forward-back movement to the motion transmission means 50.

In this second embodiment the shaft of the motor 3 is rotated forward and back so that to create a mutual motion of the motion transmission means 50.

Furthermore it is important to underline that the same object is also achieved rotating in a single direction the pinion gear 6 of the motor 3, so obtaining a motion of mutual approaching and spacing of the fixing means 11 and 12.

The figure 4 shows a third embodiment of the device 1 in which on the outlet shaft of the motor 3 it is assembled a spool 17 on which are wound alternatively and unwound connecting means 15, for instance cables or thin plates, whose remaining end is connected to springs 24a and 24b positioned in the motion transmission means 50 in such a way to be compressed in correspondence of a rolling condition of the cable or thin plate 15 around the spool 17 rotated by the motor 3. The springs 24a and 24b when the cables or thin plates 15 are unwound, return elastically in their original shape removing each end of the rod 2a, 2b and therefore moving forward and back the rods 2a and 2b.

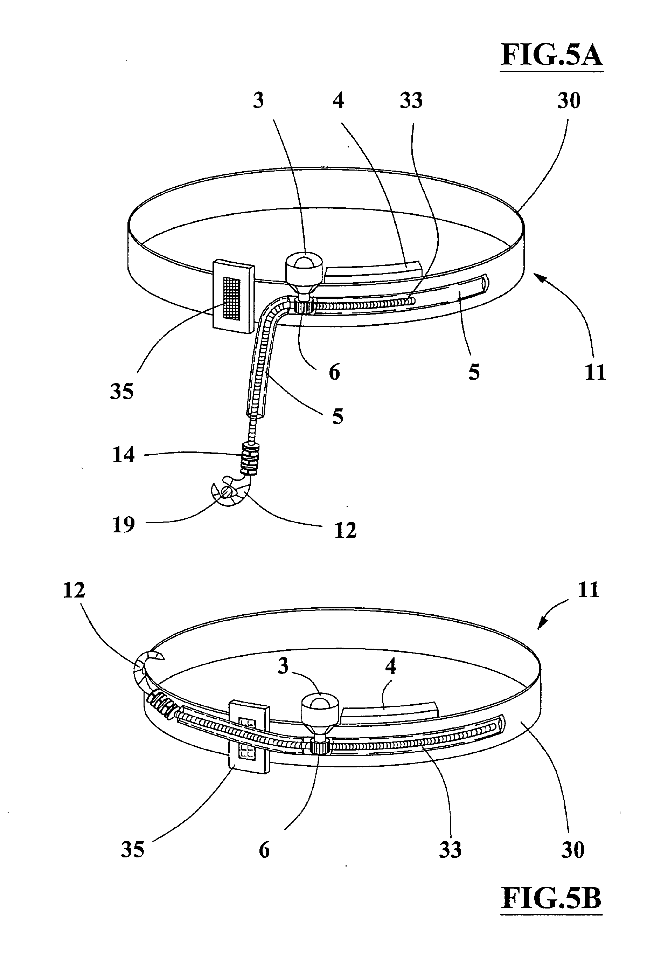

The figures 5A and 5B show a fourth embodiment in which the first fixing mean 11 is constituted by a belt shaped band 30 which can be worn around the waist and adjusted by means of a closure 35. The motion transmission means 50 are constituted by a flexible rack guide 33, made of the plastic or flexible harmonic metal, whose free end protrudes from the housing 5 and has connected the second fixing mean 12.

The pinion gear 6 of the motor 3 engages the flexible rack guide 33 in order to move this latter with an alternate axial translation following the activation of the motor 3, connected to the band 30.

The second fixing mean 12 is connected to the flexible rack guide 33 by means of an articulated joint 14.

During the operation, in correspondence of an operational condition, the flexible rack guide 33 slides internally driven by the housing 5 which is flexible at least in the portion included between the second fixing mean 12 and the motor 3.

In the operational condition shown in figure 5A the flexible portion of the housing 5 is removed from the band 30, while it is completely leaned to this latter in correspondence of a no operational condition of the device, shown in figure 5B, in which it is further possible to hook the second fixing mean 12 to the band/belt 30.

The motor 3 is connected to the band 30 as the power supply elements 4, which in such a way can have an additional capacity in comparison with the preceding embodiments connectable to the power supply mains for the recharge.

It is advantageous to underline that all the motion transmission means 50 can be constituted by telescopic elements, whose regulation allows adjusting the device 1 to the distance between the cradle, the baby carriage, the bed and the fixed stop 18 to which a fixing mean is connected in order to transmit the translatory motion to the baby carriage, cradle and bed.

Furthermore the amplitude adjustment of the motion transmission means 50 is made by virtue of the different amplitudes of the rotation angle imposed by the motor 3 in the alternate motion.

The fixing means, first 11 and second 12, in all the embodiments of the device 1 have a "hand" shape suitable to be articulated to the motion transmission means 50, preserving and maintaining all the degrees of spatial positioning and preferably according to orthogonal and rotating orientations by means of a joint 14.

The so-called "hand" is constituted by an elastic element made of elastic material that allows a snap joint with the support 19 of the container to be rocked and with the fixed stop 18.

The band/belt 30 is fit to be worn at the person's waist or to be hooked to the fixed stop 18 such as for instance a table foot, a chair and similar hookups.

Furthermore, the device according to first, second and third embodiments has a housing 5 in which it is carried out a handle 8 for an easy transport of said device.

All the embodiments of the device 1 include the control means 16 and, excluding the fourth one, the use of an additional power supply 4a, for instance associated to the belt of a person, which can be connected to the power supply 4 by means of contacts realized in correspondence of the fixing means, first 11 and second 12.

It is very important to underline that everybody, including the old persons, advantageously can carry, install and use the mobile and portable device without any stress or effort and keeping the full control of the container for newborn or child, such as cradle, baby carriage, linking said container to his/her own body. Said linkage let the user to make some activity, for instance reading, also in open space without the risk that the container of the baby can move, for instance because of a slope or because of some loosening of the linkage of the container.

The main advantage of the present invention is to provide a device suitable to replace the manual employment of a person for rocking the cradle, bed, baby carriage or similar in order to help the newborn's sleep, even maintaining the link between the user and the newborn.

A further advantage of the present invention is to provide a device fit for simulating natural movements and vibrations that the child particularly knows, such as the undulatory movements inside the maternal womb, without breaking the "physical" connection mother-newborn/child.

A further advantage is to provide an adaptable-type device, which can be easily fit to any kind of accessory suitable for the children containment such as cradles, bed, strollers, baby carriages, seats and similar.

Another advantage of the present invention is to provide a device having small dimensions and weight, which can be easily moved and fit to any type of container by any operator.

A last advantage is that to propose a device having an easy and cheap realization, and an easy installation and maintenance.

## Claims

1. Device for the rhythmic rocking of container (19) for newborn or child **characterized in that** includes:
- a housing (5) having power supply elements (4) of a motor mean (3) associated thereto;
- first (11) and second (12) fixing means respectively connectable to said container (19) for newborn or child and to fixed stops (18);
- motion transmission means (50) which are interposed between said motor means (3) and at least one of said first (11) and second (12) fixing means and which are provided with at least a free end external to said housing (5);
said motion transmission means (50) being fit for moving at least one of said fixing means, first (11) and second (12) with a forward and back motion, in correspondence of a rocking condition of the container (19) in which said motor means (3) are activated.

2. Device according to claim 1 **characterized in that** said motion transmission means (50) comprises two rack rods (2a, 2b), sliding inside said housing (5) and connected in proximity of an end to said motor means (3) by interposing a pinion gear (6) fit for engaging said rack rods (2a, 2b) in order to forward and back moving these latter.

3. Device according to claim 2 **characterized in that** the pinion gear (6) has at least two annular toothed portions.

4. Device according to claim 2 **characterized in that** externally to each of said rack rods (2a, 2b), at opposed sides of said pinion gear (6), two guiding means (6a, 6b) are assembled.

5. Device according to claim 4 **characterized in that** each one of the two guiding means (6a, 6b) includes one between backing and guiding idle rollers (40) and annular guide (41).

6. Device according to claim 1 **characterized in that** between each of said motion transmission means (50) and said motor means (3) a kinematic motion is interposed, composed by connecting rods (28a, 28b) and crank (9) and fit to impose a synchronous forward and backward movement to said motion transmission means (50).

7. Device according to claim 1 **characterized in that** each of said motion transmission means (50) include a rod (2a, 2b) connected to said motor mean (3) by means of connecting means (15) with the interposition of elastic means (24a, 24b) suitable to be compressed in correspondence of a rolling condition of said connecting means (15) around a spool (17) rotated by said motor mean (3) and to remove the rod end in correspondence of the unrolling of said connecting means (15) by imposing a forward and backward motion to said rods (2a, 2b).

8. Device according to any of the preceding claims **characterized in that** the outlet shaft of motor mean (3) is moved with an alternative motion.

9. Device according to claim 7 **characterized in that** the outlet shaft of the motor mean (3) is moved with rotating motion.

10. Device according to any of the preceding claims **characterized in that** each of the fixing means, first (11) and second (12), is constrained to said motion transmission means (50) by means of an articulated joint (14).

11. Device according to any of the preceding claims **characterized in that** each of the fixing means, first (11) and second (12), comprise at least one between a hook and an adjustable belt (31).

12. Device according to claim 11 **characterized in that** each adjustable belt (31) is fixed to a swiveling element (45) carried out at the ands of each fixing mean (11, 12).

13. Device according to claim 1 **characterized in that**:
- said first fixing mean (11) is constituted by a band (30) shaped as an adjustable belt by means of a closure (35);
- said motion transmission means (50) are constituted by a flexible rack guide (33) whose free end protrudes from the housing (5) and has connected said second fixing mean (12);
- said pinion gear (6) of the motor mean (3) engages said flexible rack guide (33) so moving this latter with an alternative motion in consequence of the activation of said motor mean (3), connected to said band (30).

14. Device according to claim 13 **characterized in that** said second fixing mean (12) is connected to said flexible rack guide (33) by means of an articulated joint (14).

15. Device according to claim 13 **characterized in that** said flexible rack guide (33) slides internally driven by said housing (5) that is flexible in the portion included between the second fixing mean (12) and the motor mean (3).

16. Device according to claim 13 **characterized in that** said housing (5) is completely leaned to said band (30) in correspondence of a no operational condition of said device by virtue of the connection between said second fixing mean (12) and said band (30).

17. Device according to claim 13 **characterized in that** the power supply elements (4) are connected to said band (30).

18. Device according to any of the preceding claims **characterized in that** the motion transmission means (50) are telescopic.

19. Device according to any of the claims from 1 to 10 **characterized in that** the housing (5) has a handle (8).

20. Device according to any of the preceding claims **characterized in that** the rotation angle amplitude of said motor mean shaft is adjustable in such a way to preset the protrusion from said housing (5) of at least one of said fixing means, first (11) and second (12).

21. Device according to any of the preceding claims **characterized in that** includes control means (16) provided with a user interface (44) for at least the electronic control of the shaft rotation of the motor means (3).

22. Device according to claim 1 **characterized in that** the rods (2a, 2b) have at least a stroke ranging from 12 cm to 18 cm in correspondence of a first rocking motion in the range of 13- 17 oscillations per minute or a stroke ranging from 25 cm to 40 cm in correspondence of a second rocking motion in the range of 8 - 12 oscillations per minute.

23. Device according to any of the preceding claims **characterized in that** at least one of said fixing means, first (11) and second (12), is constituted by an elastic element allowing a snap joint with the container (19).

24. Device according to claims from 1 to 10 **characterized in that** the power supply elements (4) provide at least an additional element (4a) connected thereto through at least one between said fixing means, first (11) and second (12).
